# EUROPEAN PATENT APPLICATION

(11) **EP 3 945 101 A1**
(43) Date of publication of application: **02.02.2022**
(21) Application number: 20188537.3
(22) Date of filing: 30.07.2020
(51) Int. Cl.: C08G 18/24, C08G 18/28, C08G 18/10, C08G 18/32, C09D 175/04

(54) **CURABLE COMPOSITIONS AND PRODUCTS FORMED THEREFROM, AND METHODS OF FORMING THE SAME**

(71) Applicant: Covestro Deutschland AG, 51373 Leverkusen (DE)
(72) Inventor: POCHOROVSKI, Igor, 51467 Bergisch Gladbach (DE)
(74) Representative: Levpat

(57) **Abstract**

A curable composition, a method of making the curable composition, and a product produced therefrom are provided. A morpholinedione is contacted with an isocyanate pepolymer to form a resin composition. The resin composition is reacted with an amine to form the curable composition. The curable composition is cured.

## Description

### FIELD OF THE INVENTION

The present disclosure relates to a curable composition, a method of making the curable composition, and a product produced therefrom.

### BACKGROUND OF THE INVENTION

Two-component polyurethane forming compositions are widely used because of the many advantageous properties they exhibit. These compositions generally comprise a liquid binder component and a liquid hardener/crosslinker component. The liquid binder component may comprise an isocyanate-reactive component, such as a polyol, and the liquid crosslinker component may comprise a polyisocyanate. The addition reaction of the polyisocyanate with the isocyanate-reactive component, which can occur at ambient conditions, can produce crosslinked polyurethane networks that form coatings.

### SUMMARY OF THE INVENTION

The present disclosure provides a method for forming a curable composition. The method comprises contacting a morpholinedione with an isocyanate prepolymer to form a resin composition, wherein the isocyanate prepolymer contains urethane and/or allophanate groups and is available from an addition reaction of a polyisocyanate with a polyether polyol and/or a polyester polyol. The resin composition is reacted with an amine to form the curable composition.

The present disclosure also provides a curable composition, produced by a method comprising:
contacting a morpholinedione with an isocyanate prepolymer to form a resin composition, wherein the isocyanate prepolymer contains urethane and/or allophanate groups and is available from an addition reaction of a polyisocyanate with a polyether polyol and/or a polyester polyol;
   and
reacting the resin composition with an amine to form a curable composition.

The present disclosure also provides a product produced by contacting a morpholinedione with an isocyanate prepolymer to form a resin composition, wherein the isocyanate prepolymer contains urethane and/or allophanate groups and is available from an addition reaction of a polyisocyanate with a polyether polyol and/or a polyester polyol. The resin composition is reacted with an amine to form the curable composition. The curable composition is cured to form the product.

It is understood that the invention disclosed and described in this specification is not limited to the embodiments summarized in this Summary. The reader will appreciate the foregoing details, as well as others, upon considering the following detailed description of various non-limiting and non-exhaustive embodiments according to this specification.

### DETAILED DESCRIPTION OF THE INVENTION

Various embodiments are described and illustrated herein to provide an overall understanding of the structure, function, operation, manufacture, and use of the disclosed products and processes. The various embodiments described and illustrated herein are non-limiting and non-exhaustive. Thus, the invention is not limited by the description of the various non-limiting and non-exhaustive embodiments disclosed herein. Rather, the invention is defined solely by the claims. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Furthermore, Applicant reserves the right to amend the claims to affirmatively disclaim features or characteristics that may be present in the prior art. The various embodiments disclosed and described in this specification can comprise, consist of, or consist essentially of the features and characteristics as variously described herein.

Any patent, publication, or other disclosure material identified herein is incorporated herein by reference in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference herein to "certain examples," "some examples," "various non-limiting examples," or the like, means that a particular feature or characteristic may be included in an example. Thus, use of such phrases, and similar phrases, herein does not necessarily refer to a common example, and may refer to different examples. Furthermore, the particular features or characteristics may be combined in any suitable manner in one or more examples. Thus, the particular features or characteristics illustrated or described in connection with various examples may be combined, in whole or in part, with the features or characteristics of one or more other examples. Such modifications and variations are intended to be included within the scope of the present specification. In this manner, the various examples described in this specification are non-limiting and non-exhaustive.

In this specification, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Also, any numerical range recited herein includes all sub-ranges subsumed within the recited range. For example, a range of "1 to 10" includes all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited. All such ranges are inherently described in this specification.

The grammatical articles "a," "an," and "the," as used herein, are intended to include "at least one" or "one or more," unless otherwise indicated, even if "at least one" or "one or more" is expressly used in certain instances. Thus, the articles are used herein to refer to one or more than one (i.e., to "at least one") of the grammatical objects of the article. Furthermore, the use of a singular noun includes the plural, and the use of a plural noun includes the singular, unless the context of the usage requires otherwise.

As used herein, "polymer" encompasses prepolymers, oligomers, and both homopolymers and copolymers; the prefix "poly" in this context referring to two or more.

As used herein, the term "aliphatic" refers to organic compounds characterized by substituted or unsubstituted straight, branched, and/or cyclic chain arrangements of constituent carbon atoms. Aliphatic compounds do not contain aromatic rings as part of the molecular structure thereof.

As used herein, the term "cycloaliphatic" refers to organic compounds characterized by arrangement of carbon atoms in closed ring structures. Cycloaliphatic compounds do not contain aromatic rings as part of the molecular structure thereof. Therefore, cycloaliphatic compounds are a subset of aliphatic compounds. Therefore, the term "aliphatic" encompasses aliphatic compounds and/or cycloaliphatic compounds.

As used herein, "isocyanate" refers to a compound containing an isocyanate group. The isocyanate can comprise at least one of a monoisocyanate and a polyisocyanate. As used herein, "monoisocyanate" refers to a compound containing one isocyanate group, "diisocyanate" refers to a compound containing two isocyanate groups and "polyisocyanate" refers to a compound containing two or more isocyanate groups. Hence, diisocyanates are a subset of polyisocyanates.

As used herein, "isocyanate prepolymer" refers to a prepolymer containing an isocyanate group. The isocyanate prepolymer can comprise at least one of a monofunctional isocyanate prepolymer and a polyfunctional isocyanate prepolymer. As used herein, "monofunctional isocyanate prepolymer" refers to a prepolymer containing one isocyanate group, "difunctional isocyanate prepolymer" refers to a prepolymer containing two isocyanate groups and "polyfunctional isocyanate prepolymer" refers to a prepolymer containing two or more isocyanate groups. Hence, difunctional isocyanate prepolymers are a subset of polyfunctional isocyanate prepolymers.

As used herein, "amine" refers to a compound containing an amino group. The amine can comprise at least one of a monoamine and a polyamine. As used herein, "monoamine" refers to a compound containing one amino group, "diamine" refers to a compound containing two amino groups and "polyamine" refers to a compound containing two or more amino groups. Hence, diamines are a subset of polyamines.

As used in this specification, the terms "cure" and "curing" refer to a chemical crosslinking of components in a curable composition and/or a chain extension of the curable composition. Accordingly, the terms "cure" and "curing" do not encompass solely physical drying of curable compositions through solvent or carrier evaporation. In this regard, the term "cured," as used in this specification, refers to the condition of a curable composition in which a component of the curable composition has chemically reacted to form a new covalent bond.

Having a free isocyanate group may be undesirable. Thus, a curable composition, a method of making the curable composition, and a product produced therefrom are provided and they can minimize and/or can eliminate free isocyanate groups and/or a reaction of isocyanate groups during curing of the curable composition. More specifically, a morpholinedione can be contacted with an isocyanate prepolymer to form a resin composition. The resin composition can be reacted with an amine to form a curable composition.

A morpholinedione comprises a ring structure comprising an amine group, an ether group, and two carbonyl groups. The morpholinedione can comprise a hydroxyl group and, in those examples, the hydroxyl group can be pendant from the amine group in the ring structure. The ring structure can comprise six members and at least one carbonyl group may be adjacent to the ether group such that the adjacent carbonyl group and the ether group form an ester. At least one carbonyl group may be adjacent to the amine group such that the adjacent carbonyl group and the amine group form an amide. The morpholinedione can comprise the Formula I and/or isomers thereof. 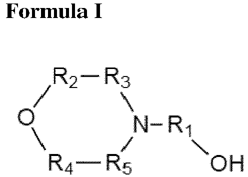 R₁ can be an alkyl bridging group. As used herein, an "alkyl bridging group" means a methylene bridging group (e.g., -CH₂-) or a chain of single bonded carbons (e.g., -CH₂-CH₂-, -CH₂-CH₂-CH₂-). R₁ may not be present in formula I and the hydroxyl group can be directly attached to the amine group. Two of R₂, R₃, R₄, and R₅ can be a carbonyl group and the remaining two of R₂, R₃, R₄, and R₅ can be methylene bridges (e.g., -CH₂-). As used herein, an "alkyl group" can comprise at least one of an alkyl such as, for example, a methyl (e.g., -CH₃), an ethyl (e.g., -CH₂-CH₃), or a propyl group (e.g., -CH₂-CH₂-CH₃), and an alkyl bridging group. For example, the morpholinedione can comprise N-hydroxyethylmorpholine-2, 3-dione, which comprises Formula II and/or isomers thereof.

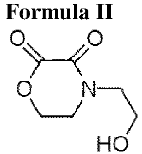

The morpholinedione can comprise a reaction product of diethanolamine and a diethyloxalate. For example, the reaction of diethanolamine and a diethyloxalate to form N-hydroxyethylmorpholine-2, 3-dione is illustrated in Scheme I.

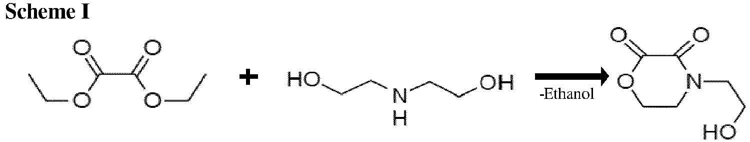

The morpholinedione can be contacted with a first isocyanate prepolymer to form a resin composition. The first isocyanate prepolymer can react with the hydroxyl group in the morpholinedione to form an adduct comprising a carbamate (e.g., urethane). The resin composition may include minimal, if any, free isocyanate groups. For example, the resin composition may not include any free isocyanate groups. The resin composition may comprise 2-(morpholine-2, 3-dione)alkyl alkylcarbamate and/or 2-(2, 3-morpohlinedione)alkyl arylcarbamate. The reaction of the morpholinedione and the first isocyanate prepolymer to form the resin composition is illustrated in Scheme II. 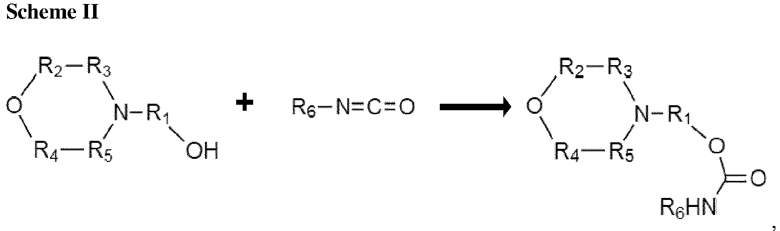 wherein R₆ is a monovalent organic radical, as can be obtained by removing one of the isocyanate groups from a corresponding monofunctional or polyfunctional isocyanate prepolymer containing urethane and/or allophanate groups.
An isocyanate prepolymer can comprise a monofunctional or a polyfunctional isocyanate prepolymer . When comprising a polyfunctional isocyanate prepolymer, the adduct may include two or more morpholinediones per polyfunctional isocyanate prepolymer. For example, if the polyfunctional isocyanate prepolymer is a difunctional isocyanate prepolymer, the adduct can comprise two morpholinediones per difunctional isocyanate prepolymer.

The isocyanate prepolymer contains urethane and/or allophanate groups which are available from an addition reaction of a polyisocyanate with a polyether polyol and/or a polyester polyol.
Mention may be made, as polyisocyanates which can be used in this addition reaction, for example, of known per se monomeric polyisocyanates with aliphatically, cycloaliphatically, araliphatically or aromatically bonded isocyanate groups, such as diisocyanates, such as, e.g., 1,4-diisocyanatobutane, 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane, 1-isocyanato-1-methyl-4(3)-isocyanatomethylcyclohexane (IMCI), bis(isocyanatomethyl)norbornane, 2,4- and 2,6-diisocyanatotoluene (TDI), 2,4'- and 4,4'-diisocyanatodiphenylmethane and higher homologues, 1,5-diisocyanatonaphthalene (NDI), norbornan diisocyanate (NBDI), "dipropylene glycol diisocyanate" (isomers of 2-(2-isocyanatopropoxy)-1-propyl isocyanate, 1,1'-oxydi(2-propyl) isocyanate and 2,2'-oxydi(1-propyl)isocyanate), such as triisocyanates and/or higher functional isocyanates, such as, e.g., 4-isocyanatomethyl-1,8-octane diisocyanate (nonane triisocyanate), 1,6,11-undecane triisocyanate or any mixture of such isocyanate compounds.
In addition, isocyanates with iminooxadiazinedione, isocyanurate, uretdione, urethane, allophanate, biuret, urea, oxadiazinetrione, oxazolidinone, acylurea and/or carbodiimide structures based on the above mentioned monomeric polyisocyanates can also be used in the synthesis of the isocyanate prepolymer.
Any mixture of the isocyanates mentioned above can be used.
Preferably, HDI, PDI, TDI and/or NDI are used as isocyanate component in the synthesis of the isocyanate prepolymer.

Mention may be made, as polyester polyol, which can be used in the addition reaction, for example, of those with an average molecular weight, calculable from functionality and hydroxyl number, of 200 to 3000, preferably of 250 to 2500, having a hydroxyl group content of 1 to 21 wt%, preferably 2 to 18 wt%, of the kind preparable in a manner known per se by reaction of polyhydric alcohols with deficit amounts of polybasic carboxylic acids, corresponding carboxylic anhydrides, corresponding polycarboxylic esters of lower alcohols, or lactones.

Polyhydric alcohols suitable for preparing these polyester polyols are, in particular, those of the molecular weight range 62 to 400, such as, for example, 1,2-ethanediol, 1,2- and 1,3-propanediol, the isomeric butanediols, pentanediols, hexanediols, heptanediols and octanediols, 1,2- and 1,4-cyclohexanediol, 1,4-cyclohexanedimethanol, 4,4'-(1-methylethylidene)biscyclohexanol, 1,2,3-propanetriol, 1,1,1-trimethylolethane, 1,2,6-hexanetriol, 1,1,1-trimethylolpropane, 2,2-bis(hydroxymethyl)-1,3-propanediol or 1,3,5-tris(2-hydroxyethyl)isocyanurate.

The acids or acid derivatives used for preparing the polyester polyols may be aliphatic, cycloaliphatic and/or heteroaromatic in nature and may optionally be substituted, by halogen atoms, for example, and/or unsaturated. Examples of suitable acids are, for example, polybasic carboxylic acids of the molecular weight range 118 to 300 or derivatives thereof such as, for example, succinic acid, adipic acid, sebacic acid, phthalic acid, isophthalic acid, trimellitic acid, phthalic anhydride, tetrahydrophthalic acid, maleic acid, maleic anhydride, dimeric and trimeric fatty acids, dimethyl terephthalate and bisglycol terephthalate.

For preparing the polyester polyols it is also possible to use any desired mixtures of these exemplified starting compounds.

Suitable polyester polyols are also those of the kind preparable in a conventional way from lactones and simple polyhydric alcohols, such as those exemplified above, for example, as starter molecules, with ring opening. Examples of suitable lactones for preparing these polyester polyols are β-propiolactone, γ-butyrolactone, γ- and δ-valerolactone, ε-caprolactone, 3,5,5- and 3,3,5-trimethylcaprolactone or any desired mixtures of such lactones.

The preparation of these lactone polyesters is accomplished generally in the presence of catalysts, for example Lewis or Brønsted acids, organotin or organo titanium compounds, at temperatures of 20 to 200°C, preferably 50 to 160°C.

Suitable polyester polyols are also those that contain in addition to the esters structures carbonate structures and therefore are also called polyester carbonate polyols. Such polyester carbonate polyols, are available by the synthesis of a polyester polyol as described above, preferably by the reaction of a lactone with a polyhydric alcohol, followed by the reaction of the resulting polyester polyol with carbonic acid derivatives, such as diphenyl- or dimethyl carbonate or phosgene. Such polyester carbonate polyols are described in DE 1 770 245 A.

Mention may be made, as polyether polyol, which can be used in the addition reaction, for example, of those which exhibit number-average molecular weights Mₙ of 300 to 20 000 g/mol, particularly preferably 1000 to 12 000 g/mol and very particularly preferably 2000 to 6000 g/mol.

Further, they preferably have a mean OH functionality of ≥ 1.9, particularly preferably ≥ 1.95.

The OH functionality of these polyethers is in this connection preferably < 6, particularly preferably < 4.

Such polyether polyols are accessible in a way known per se by alkoxylation of suitable starter molecules under base catalysis or by the use of double metal cyanide compounds (DMC compounds).

Particularly suitable polyether polyols are those of the abovementioned type with a content of unsaturated end groups of less than or equal to 0.02 milliequivalents per gram of polyol (meq/g), preferably less than or equal to 0.015 meq/g, particularly preferably less than or equal to 0.01 meq/g (determination method ASTM D2849-69).

Such polyether polyols have in this connection a particularly narrow molecular weight distribution, that is a polydispersity (PD = M_{w}/Mₙ) of 1.0 to 1.5, and/or an OH functionality ≥ 1.9. The polyether polyols mentioned preferably exhibit a polydispersity of 1.0 to 1.5 and an OH functionality of greater than 1.9, particularly preferably of greater than or equal to 1.95.

Such polyether polyols can be prepared in a way known per se by alkoxylation of suitable starter molecules, in particular using double metal cyanide catalysts (DMC catalysis). This is, e.g., described in US-A 5 158 922 (e.g. Example 30) and EP-A 0 654 302 (p. 5, 1. 26 to p. 6, 1. 32).

Suitable starter molecules for the preparation of polyether polyols are, for example, simple low-molecular-weight polyols, water, organic polyamines with at least two N-H bonds, or any mixture of such starter molecules. Alkylene oxides suitable for the alkoxylation are in particular ethylene oxide and/or propylene oxide, which can be used in the alkoxylation in any sequence or else in a mixture.

Preferred starter molecules for the preparation of polyether polyols by alkoxylation, in particular according to the DMC process, are simple polyols, such as ethylene glycol, 1,3-propylene glycol and butane-1,4-diol, hexane-1,6-diol, neopentyl glycol, 2-ethylhexane-1,3-diol, glycerol, trimethylolpropane, pentaerythritol, and also low-molecular-weight esters of such polyols with dicarboxylic acids, which esters exhibit hydroxyl groups, or low-molecular-weight ethoxylation or propoxylation products of such simple polyols, or any mixture of such polyhydroxy compounds.

The polyether polyols and/or polyester polyols may be mixed with further polyols, with the proviso that the proportion of such further polyols shall not exceed 95 weight-%, preferably 75 weight-%, more preferably 50 weight-%, most preferably 20 weight-%, based on the total amount of polyether polyols, polyester polyols and the "further" polyols.

Mention may be made, as such further polyols, which can be used in mixture with the polyester polyols and polyether polyols in the isocyanate prepolymer synthesis, for example, of low-molecular-weight monools (e.g., linear and branched C₁ to C₂₂ monools, e.g. 2-ethylhexanol), diols (e.g., 1,2-ethanediol, 1,3- or 1,2-propanediol, 1,4-butanediol), triols (e.g., glycerol, trimethylolpropane) and tetraols (e.g. pentaerythritol), polyacrylate polyols, polycarbonate polyols and polythioether polyols.

The synthesis of isocyanate prepolymers comprising urethane and/or allophanate groups is described in the state of the art, e.g. in WO2005/095481, US2006/0142529 und WO2019/137882.
The synthesis can be carried out with or without using catalysts. Catalysts which may be used to promote the urethanization reaction, are, for example, metallic catalysts and nonmetallic catalyst, such as, for example, amine catalysts (e.g., 1,8-diazabicyclo[5.4.0]undec-7-ene (DBU), 1,4-diazabicyclo[2.2.2]octane (DABCO) or triethanolamine), Lewis acid compounds (e.g., dibutyltin dilaurate), lead octoate, tin octoate, titanium complexes, zirconium complexes, cadmium compounds, bismuth compounds (e.g., bismuth neodecanoate) and iron compounds. Catalysts which may be used to promote the allophanatization reaction, are, for example, zinc compounds, such as zinc(II) stearate, zinc(II) n-octanoate, zinc(II) 2-ethyl-1-hexanoate, zinc(II) naphthenate or zinc(II) acetylacetonate, tin compounds, such as tin(II) n-octanoate, tin(II) 2-ethyl-1-hexanoate, tin(II) laurate, dibutyltin oxide, dibutyltin dichloride, dibutyltin diacetate, dibutyltin dilaurate, dibutyltin dimaleate or dioctyltin diacetate, zirconium compounds, such as zirconium(IV) 2-ethyl-1-hexanoate, zirconium(IV) neodecanoate, zirconium(IV) naphthenate or zirconium(IV) acetylacetonate, aluminium tri(ethylacetoacetate), iron(III) chloride, potassium octoate, manganese, cobalt or nickel compounds, and also strong acids, such as trifluoroacetic acid, sulphuric acid, hydrogen chloride, hydrogen bromide, phosphoric acid or perchloric acid.

In forming the resin composition according to the present disclosure, the isocyanate prepolymer and morpholinedione may be combined in relative amounts such that the resin composition has a ratio of isocyanate groups to isocyanate-reactive groups (e.g., hydroxyl group) in an effective ratio for a curing process. For example, the resin composition may have a ratio of isocyanate groups to isocyanate-reactive groups (e.g., hydroxyl group) of 0.01:1 to 3.0:1, such as, for example, 0.8:1 to 3.0:1, 0.5:1 to 2.0:1, 0.8:1 to 2.0:1, 0.8:1 to 1.2:1, 0.9:1 to 1:1, 0.9:1 to 1.1:1, 1:1 to 1.1:1, 1:1 to 1.8:1, or 1:1 to 1.5:1. The resin composition may have a ratio of isocyanate groups to isocyanate-reactive groups (e.g., hydroxyl group) of at least 0.01:1, such as, for example, at least 0.5:1, at least 0.8:1, at least 0.9:1, at least 1:1, at least 1.1:1, at least 1.2:1, at least 1.5:1, or at least 2.0:1. The resin composition may have a ratio of isocyanate groups to isocyanate-reactive groups (e.g., hydroxyl group) of no greater than 3.0:1, such as, for example, no greater than 2.0:1, no greater than 1.5:1, no greater than 1.2:1, no greater than 1.1:1, no greater than 1.1:1, no greater than 0.9:1, no greater than 0.8:1, or no greater than 0.5:1.

The resin composition can comprise a catalyst for the reaction between the isocyanate-reactive group and the isocyanate group. The catalyst can comprise at least one of a metallic catalyst and/or a nonmetallic catalyst, such as, for example, an amine catalyst (e.g., 1,8-diazabicyclo[5.4.0]undec-7-ene (DBU), 1,4-diazabicyclo[2.2.2]octane (DABCO) or triethanolamine), a Lewis acid compound (e.g., dibutyltin dilaurate), lead octoate, tin octoate, a titanium complex, a zirconium complex, a cadmium compound, a bismuth compound (e.g., bismuth neodecanoate), and an iron compound. The catalyst can be present in the resin composition in an amount of no more than 3.0% by weight based on the total solids contents of the composition.

Where the morpholinedione comprises N-hydroxyethylmorpholine-2,3-dione, the morpholinedione can react with the first isocyanate prepolymer to form a resin composition comprising 2-(morpholine-2, 3-dione)ethyl alkylcarbamate and/or 2-(2,3-morpholinedione)ethyl arylcarbamate as illustrated in Scheme III. 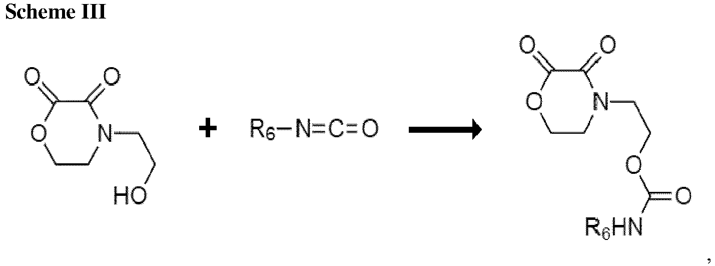 wherein R₆ is a monovalent organic radical, as can be obtained by removing one of the isocyanate groups from a corresponding monofunctional or polyfunctional isocyanate prepolymer containing urethane and/or allophanate groups.

The resin composition can be reacted with an amine to form the curable composition. The curable composition can be an adduct of the amine and the resin composition. The reaction may include minimal, if any, free isocyanate groups. For example, the present disclosure provides the reaction in which the resin composition with the amine may not include the reaction of a free isocyanate group. The reaction of the resin composition and the amine can comprise a ring opening reaction. For example, the amine can react with the ester group in the morpholinedione to dissolve the bond between the oxygens in the ester group and, thus, open the ring of the cycloaliphatic compound in the resin composition. The reaction of the resin composition and the amine can comprise a cross-linking of the resin composition with the amine (e.g., 0.01-100% crosslinked). For example, the reaction of the resin composition and the amine to form the curable composition is illustrated in Scheme IV. 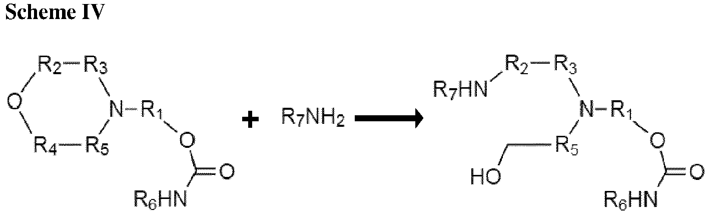 Wherein R₁ to R₅ have the meanings as specified in Formula I and Scheme II and R₇ is a monovalent organic radical, as can be obtained by removing one of the amino groups from a corresponding monoamine or polyamine, that has (cyclo)aliphatically or araliphatically or aromatically attached amino groups.

The amine may be a primary amine, i.e. an amine containing one or more primary amino groups, a secondary amine, i.e. an amine containing one or more secondary amino groups, or an amine containing one or more primary and one or more secondary amine groups. The amine may comprise at least one of diethylenetriamine, piperidine, piperazine, 1-(2-aminoethyl)piperazine, 4,7,10-trioxa-1,13-tridecanediamine, 2-methylpentamethylenediamine, isophorone diamine, 4,4'-diaminodicyclohexylmethane, 3, 3'-dimethyl-4, 4'diaminodicyclohexylmethane, 4-(aminomethyl)octane-1,8-diamine, ethylene diamine, ethylene triamine, propylene diamine, tetramethylene diamine, 1,6-hexamethylene diamine, bis(6-aminohexyl)ether, tricyclodecane diamine, N,N'-dimethyldiethyltriamine, cyclohexyl-1,2,4-triamine, cyclohexyl-1,2,4,5-tetraamine, 3,4,5-triaminopyran, 3,4-diaminofuran, cycloaliphatic diamines, such as 1,8-p-menthane diamine, triaminononane, a polyether amine, as e.g. a polyoxypropylene amine, a polyoxyethylene amine or a polyoxytetramethylene amine, especially such polyether amines as those marketed by Huntsman under the name Jeffamin^{®}, and a polyaspartic ester based amine.

Preferred are such amines, which contain one or more primary amino groups, at least one of which is attached to a secondary C-atom or a tertiary C-atom. Especially preferred are such amines, which contain one or more primary amino groups, at least one of which is attached to a secondary C-atom. In addition to the one or more primary amino groups, the amine may contain one or more secondary amino groups. Preferably the amine contains exclusively one or more primary amino groups.

Amines, which contain one or more primary amino groups, at least one of which is attached to a secondary C-atom or a tertiary C-atom, have proved beneficial with regard to the resulting curable compositions. Amines, which contain one or more primary amino groups, at least one of which is attached to a tertiary C-atom lead to compositions with a working life up to about 24 hours and amines, which contain one or more primary amino groups, at least one of which is attached to a secondary C-atom lead to compositions with a working life up to about 15 minutes.

Examples for amines, which contain one or more primary amino groups, at least one of which is attached to a secondary C-Atom, are isophorone diamine, 4,4'-diaminodicyclohexylmethane, 3, 3'-dimethyl-4, 4'diaminodicyclohexylmethane and 4-(aminomethyl)octane-1,8-diamine, polyether amines, such as those marketed by Huntsman under the name Jeffamin^{®}.

1,8-p-menthane diamine may be mentioned as an example for amines, which contain one or more primary amino groups, at least one of which is attached to a tertiary C-Atom.

Where the resin composition was formed from morpholinedione comprising N-hydroxyethylmorpholine-2,3-dione, the resin composition can react with an amine to form the curable composition as illustrated in Scheme V. 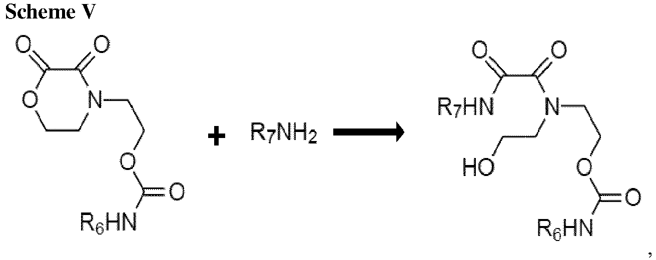 wherein R₁ to R₇ have the meanings as specified above.

The curable composition can be reacted with an additional reactant (X) to form a secondary composition. The additional reactant can react with the free hydroxyl group in the curable composition to form the secondary composition as illustrated in Scheme VI. 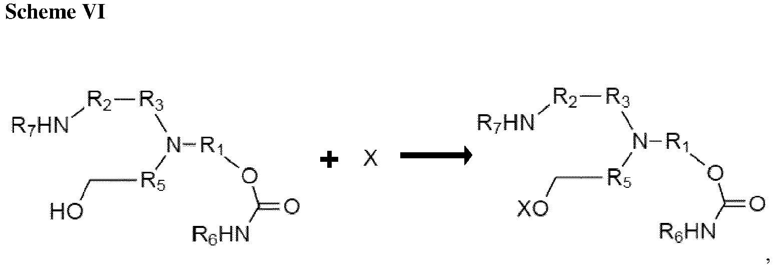 wherein R₁ to R₇ have the meanings as specified above.

The additional reactant can be various chemicals suitable to react with the free hydroxyl group in the curable composition. The additional reactant may be, for example, at least one of an isocyanate, a second isocyanate prepolymer, a silane, and a melamine. The second isocyanate prepolymer may be different than or the same as the first isocyanate prepolymer. In examples where the first and second isocyanate prepolymer are different, or where X is an isocyanate, the curable composition can comprise unique properties otherwise unattainable with only one isocyanate prepolymer.

Isocyanates, which can be used for X, are, e.g., the isocyanates listed above for use in the synthesis of the isocyanate prepolymers. The isocyanate used for X can be the same or different than the one used in the synthesis of the isocyanate prepolymer.

Where the curable composition was formed from morpholinedione comprising N-hydroxyethylmorpholine-2,3-dione, the reaction of the curable composition with a second isocyanate prepolymer or an isocyanate to form the secondary composition is illustrated in scheme VII. 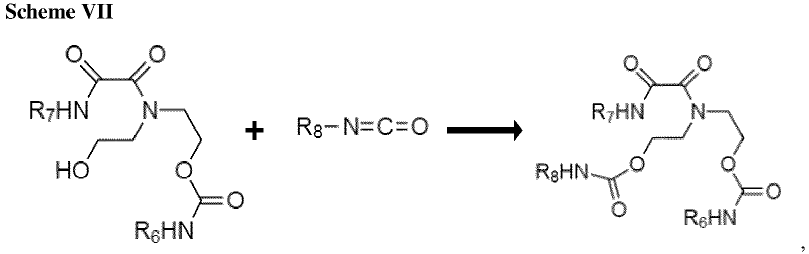 wherein R₁ to R₇ have the meanings as specified above and R₈ is a monovalent organic radical, as can be obtained by removing one of the isocyanate groups from a corresponding monofunctional or polyfunctional isocyanate or a corresponding monofunctional or polyfunctional isocyanate prepolymer containing urethane and/or allophanate groups. In the latter case R₈ and R₆ can be the same or different. The method according to the present disclosure can enable the addition of different chemical groups to the secondary composition through the use of at least two different reaction steps with two different isocyanates.

Schemes II-VII illustrate a subunit of a polymer through different stages of a polymerization reaction and should not be considered limiting of a length, configuration, composition, crosslinking, and/or molecular weight of a polymer that can be formed. The isocyanate prepolymer and amine depicted in Schemes II-VII can have various amounts of active groups as describe herein.

The curable composition and/or secondary composition can be cured to form a product. The curable composition and/or secondary composition can be cured at a temperature in a range of 0°C to 200°C, such as, for example, 20°C to 150°C, 25°C to 140°C, or 80°C to 140°C. The curable composition and/or secondary composition can be cured at a temperature of at least 20°C, such as, for example, at least 25°C, at least 50°C, at least 80°C, at least 100°C, at least 140°C, or at least 150°C. The curable composition and/or secondary can be cured for at least one minute, such as, for example, at least one hour, at least two hours, at least three hours, at least five hours, at least 10 hours, at least 15 hours, at least 16 hours, or at least 24 hours.

The product can be, for example, a component of at least one of an adhesive, a coating, a casting, a sealant, an elastomer, and a foam.

The curable composition and/or secondary composition according to the present disclosure can comprise Formula III and/or isomers thereof. 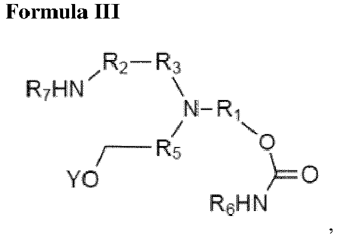 wherein R₁ to R₇ have the meanings as specified above and Y can be at least one of a hydrogen atom, an alkyl group or an aryl group, or YO is a carbamate group.

The non-limiting and non-exhaustive example that follows is intended to further describe various non-limiting and non-exhaustive embodiments without restricting the scope of the embodiments described in this disclosure. Although the present disclosure describes a coating in the Example, those skilled in the art will appreciate it can also be equally applicable to an adhesive, a casting, a sealant, an elastomer, and a foam

All quantities given in "parts" and "percent" are understood to be by weight, unless otherwise indicated.

Various features and characteristics are described in this specification to provide an understanding of the composition, structure, production, function, and/or operation of the invention, which includes the disclosed compositions, coatings, and methods. It is understood that the various features and characteristics of the invention described in this specification can be combined in any suitable manner, regardless of whether such features and characteristics are expressly described in combination in this specification. The Inventors and the Applicant expressly intend such combinations of features and characteristics to be included within the scope of the invention described in this specification. As such, the claims can be amended to recite, in any combination, any features and characteristics expressly or inherently described in, or otherwise expressly or inherently supported by this specification. Furthermore, the Applicant reserves the right to amend the claims to affirmatively disclaim features and characteristics that may be present in the prior art, even if those features and characteristics are not expressly described in this specification. Therefore, any such amendments will not add new matter to the specification or claims and will comply with the written description, sufficiency of description, and added matter requirements.

### EXAMPLES

Unless otherwise indicated, all percentages relate to the weight and the total quantity or total weight of the compositions. Unless otherwise noted, all analytical measurements shall relate to measurements at temperatures of 23 °C.

The solids contents were determined according to DIN EN ISO 3251 by heating a weighed sample to 105 °C until constant mass. The solid state content was calculated by reweighing the sample.

NCO values were determined volumetrically in accordance with DIN-EN ISO 1 1909, unless explicitly stated otherwise. The control for free NCO groups was carried out by Infrared (IR) spectroscopy (band at 2260 cm-1).

Viscosities were determined by rotational viscometry according to DIN 53019 at 23 °C with a rotary viscosimeter of the company Anton Paar Germany GmbH, Ostfildern, DE (1 Pa s = 1 N/m2*s).

The tensile tests to determine the 100% modulus, tensile strength, and elongation at break of the obtained elastic films were carried out in accordance with DIN 53504.

The working life was determined by inspecting the ability of the prepolymer/amine mixture to flow when tilting their container. The maximal working life was reached when the prepolymer/amine mixture was not able to free-flow out of the container.

### Description of raw materials

The diisocyanate and prepolymers used are products of Covestro Deutschland AG, D 51368 Leverkusen. All other commercially available chemicals were obtained from Aldrich, D-82018 Taufkirchen.

*N*-2-Hydroxyethylmorpholine-2,3-dione (morpholinedione) was prepared according to literature procedure (M. S. Kupryushkin, M. D. Nekrasov, D. A. Stetsenko and D. V. Pyshnyi, Org. Lett. 2014, 16, 2842-2845).
Desmodur T100 is toluene-2,4-diisocyanate (TDI)
Isophorone diisocyanate (IPDI)
Hexamethylene diisocyanate (HDI)
Naphthylene-1,5-diisocyanate (NDI)
Butyl acetate (BA)
1-Methoxy-2-propylacetate (MPA)
Dibutyltin dilaurate (DBTL)
Polypropylene glycol (PPG)
NCO-terminated prepolymer 1: Desmodur VPLS 2371 is an IPDI-terminated, PPG-based prepolymer with a NCO content of 2.8%, an equivalent weight of 1100, a functionality of 2, and a solids content of 100%.
NCO-terminated prepolymer 2: Desmodur XP 2599 is a HDI-terminated, PPG-based prepolymer with a NCO content of 6.0%, an equivalent weight of 700, a functionality of 4, and a solids content of 100%.
NCO-terminated prepolymer 3: Desmodur E 15 is a TDI-terminated, PPG-based prepolymer with a NCO content of 4.4%, an equivalent weight of 955, a functionality of 2, and a solids content of 100%.
NCO-terminated prepolymer 4: Desmodur XP 2617 is a HDI-terminated, PPG-based prepolymer with a NCO content of 12.5%, an equivalent weight of 335, a functionality of 2, and a solids content of 100%.
NCO-terminated prepolymer 5: Desmodur XP 2406 is an IPDI-terminated, polyester-carbonate-based prepolymer with a NCO content of 2.8%, an equivalent weight of 1500, a functionality of 2, and a solids content of 80% in MPA.
NCO-terminated prepolymer 6: Desmodur 15 S37 is a NDI-terminated, polyester-based prepolymer with a NCO content of 3.6-4.2%, a functionality of 2, and a solids content of 100%.
Polyol 1: Baycoll AD 2047 is a linear polyester polyol with an OH number of 55 mg KOH/g and an equivalent weight of 1020.
Polyol 1: Desmophen 2061 BD is a linear polyether polyol with an OH number of 56 mg KOH/g and an equivalent weight of 1000.
Polyamine 1: Isophorone diamine (IPDA)
Polyamine 2: 4-(Aminomethyl)octane-1,8-diamine
Polyamine 3: Desmophen NH 1220 is an amino-functional reaction partner for polyisocyanates with an amine number of 240-248 mg KOH/g.

### Synthesis of morpholinedione-terminated prepolymers

### Inventive example: morpholinedione-modified prepolymer 1

Desmodur VPLS 2371 was heated to 40 °C. Morpholinedione was added with a NCO:OH ratio of 1:1, followed by the addition of DBTL as catalyst. The mixture was stirred at 70 °C until NCO groups could no longer be detected via IR spectroscopy.
Viscosity at 60 °C: 38000 mPas
Viscosity at 23 °C, 90%-solution in MPA: 140000 mPas

Inventive example: morpholinedione-modified prepolymer 2
The compound was prepared according to the general procedure above, except that Desmodur XP 2599 was used as prepolymer.
Viscosity at 60 °C: 74000 mPas
Viscosity at 23 °C, 90%-Lösung in MPA: 110000 mPas

Inventive example: morpholinedione-modified prepolymer 3
The compound was prepared according to the general procedure above, except that Desmodur E 15 was used as prepolymer.
Viscosity at 60 °C: 52000 mPas
Viscosity at 23 °C, 90%-solution in MPA: 220000 mPas

### Inventive example: morpholinedione-modified prepolymer 4

The compound was prepared according to the general procedure above, except that Desmodur XP 2617 was used as prepolymer, and the reaction was performed at 115 °C without catalyst. Viscosity at 23 °C, 80%-solution in MPA: 91000 mPas

### Inventive example: morpholinedione-modified prepolymer 5

The compound was prepared according to the general procedure above, except that Desmodur XP 2406 was used as prepolymer, and the reaction was performed at 120 °C.
Viscosity at 23 °C, 90%-solution in MPA: 490000 mPas

### Inventive example: morpholinedione-modified prepolymer 6

The compound was prepared according to the general procedure above, except that Desmodur 15 S37 was used as prepolymer, and the reaction was performed at 110 °C without catalyst.
Viscosity at 100 °C: 40000 mPas

### Inventive example: morpholinedione-modified prepolymer 7

Desmophen 2061 BD was heated to 60 °C. Desmodur T100 was added at a NCO:OH ratio of 2.0 and heated to 95 °C, until the measured NCO content was at 3.4-3.6%. Then morpholinedione was added at a NCO:OH ratio of 1:1, followed by the addition of DBTL as catalyst. The mixture was stirred at 50°C C until NCO groups could no longer be detected via IR spectroscopy.
Viscosity at 60 °C: 43000 mPas
Viscosity at 23 °C, 90%-solution in MPA: 111000 mPas

### Inventive example: morpholinedione-modified prepolymer 8

Baycoll AD 2047 was heated to 60 °C. Desmodur T100 was added at a NCO:OH ratio of 1.6 and heated to 80 °C, until the measured NCO content was at 2.1-2.3%. The mixture was diluted with BA to a solids content of 75% and morpholinedione was added at a NCO:OH ratio of 1:1. The mixture was stirred at 90°C until NCO groups could no longer be detected via IR spectroscopy. The solids content was adjusted with BA to 80%.
Viscosity at 23 °C, 80%-solution in BA: 54000 mPas

Comparative example: NCO-terminated prepolymer 1: Desmodur VPLS 2371 is an IPDI-terminated, PPG-based prepolymer with a NCO content of 2.8%, an equivalent weight of 1100, a functionality of 2, and a solids content of 100%.

Comparative example: NCO-terminated prepolymer 2: Desmodur XP 2599 is a HDI-terminated, PPG-based prepolymer with a NCO content of 6.0%, an equivalent weight of 700, a functionality of 4, and a solids content of 100%.

### Evaluation of the morpholinedione-terminated prepolymers: film formation via crosslinking with polyamines.

The prepolymers or mixtures of prepolymers were reacted with polyamines or mixtures of polyamines in a morpholinedione:amine or NCO:amine ratio of 1:0.9. 0.5 % w/w BYK-L 9565 (additive for PU-based synthetic leather, BYK Chemie GmbH, DE) and 0.5 % w/w Acronal L 700 (acrylic resin in 50 % ethyl acetate, plasticizer for coatings, BASF, DE) were used as additives. The mixtures were stirred in the Speedmixer for 30 seconds and squeegeed on a release paper of Felix Schöller Y03200 with a wet film thickness of 500 µm. The film was placed in a drying cabinet at 90°C, heated to 150°C within 5 minutes, and tempered at 150°C for 15 minutes.

The results (Table 1) show that the inventive morpholindione-modified prepolymers produce elastic films when cross-linked with aliphatic poylamines (A-M). NCO-terminated prepolymers of the comparative examples 1 to 2 were not investigated with polyamines 1 and 2, as the reaction of isocyanate groups with primary poylamines is too fast at ambient temperatures and due to the low working life no technically usable formulations were obtained. As a comparative example was therefore regarded the reaction between the mixture of NCO-terminated prepolymers 1 and 2, and polyamine 3, since polyamine 3 shows a lower reactivity towards NCO groups (N), yielding an acceptable working life. It is apparent, however, that the resulting film properties of the inventive example E were superior than those of the comparative example N.

**Table 1:**

| | A | B | C | D | E | F | G | H | I | J | K | L | M | N |
|---|---|---|---|---|---|---|---|---|---|---|---|---|---|---|
| Morpholinedione-terminated prepolymer 1 [g] | 1.6 | 3.2 | 4.8 | 6.40 | 8.00 | 11.2 | 14.4 | 14.9 | 16.9 | 18.2 | | | | |
| Morpholinedione-terminated prepolymer 2 [g] | 14.4 | 12.8 | 11.2 | 9.60 | 8.00 | 4.80 | 1.60 | | | | | | | |
| Morpholinedione-terminated prepolymer 5 [g] | | | | | | | | | | | 19.9 | | | |
| Morpholinedione-terminated prepolymer 8 [g] | | | | | | | | | | | | 17.4 | 17.4 | |
| NCO-terminated prepolymer 1 [g] | | | | | | | | | | | | | | 10 |
| NCO-terminated prepolymer 2 [g] | | | | | | | | | | | | | | 10 |
| Polyamine 1 [g] | 1.39 | 1.34 | 1.29 | 1.24 | 1.20 | 1.10 | 1.00 | 0.56 | 0.75 | 0.95 | 1.15 | 0.57 | | |
| Polyamine 2 [g] | | | | | | | | 0.24 | 0.19 | 0.11 | | | 0.42 | |
| Polyamine 3 [g] | | | | | | | | | | | | | | 4.9 |
| BA [g] | | | | | | | | | | | | 4.3 | 4.3 | |
| MPA [g] | 4 | 4 | 4 | 4 | 4 | 4 | 4 | 3.7 | 4.1 | 4.6 | 13.3 | | | |
| Acronal L 700 [g] | 0.11 | 0.11 | 0.11 | 0.11 | 0.10 | 0.10 | 0.10 | 0.10 | 0.11 | 0.12 | 0.10 | 0.10 | 0.10 | 0.13 |
| BYK-L 9565 [g] | 0.11 | 0.11 | 0.11 | 0.11 | 0.10 | 0.10 | 0.10 | 0.10 | 0.11 | 0.12 | 0.10 | 0.10 | 0.10 | 0.13 |
| 100% modulus [MPa] | 1.0 | 1.0 | 0.8 | 0.9 | 0.6 | 0.5 | 0.2 | 0.4 | 0.4 | 0.2 | 0.2 | 1.2 | 0.9 | 0.3 |
| Tensile strength [MPa] | 4.6 | 10.1 | 7.0 | 9.7 | 4.8 | 6.5 | n.a. | 4.2 | 3.8 | n.a. | 2.6 | 1.3 | 4.3 | 0.9 |
| Elongation at break [%] | 410 | 540 | 580 | 610 | 610 | 1000 | >4000 | 1250 | 1800 | >4000 | 700 | 1700 | 1300 | 380 |

## Claims

1. A method comprising:
contacting a morpholinedione with an isocyanate prepolymer to form a resin composition, wherein the isocyanate prepolymer contains urethane and/or allophanate groups and is available from an addition reaction of a polyisocyanate with a polyether polyol and/or a polyester polyol;
and
reacting the resin composition with an amine to form a curable composition.

2. The method according to claim 1, wherein the reacting step comprises cross-linking the resin composition with the amine.

3. The method according to any one of claims 1 or 2, further comprising curing the curable composition to form a product.

4. The method according to any one of claims 1 to 3, wherein the amine comprises an amine containing one or more primary amino groups, or one or more secondary amino groups, or one or more primary and one or more secondary amine groups.

5. The method according to any one of claims 1 to 4, wherein the amine comprises at least one of diethylenetriamine, piperidine, piperazine, 1-(2-aminoethyl)piperazine, 4,7,10-trioxa-1,13-tridecanediamine, 2-methylpentamethylenediamine, isophrone diamine, 4,4'-diaminodicyclohexylmethane, 3, 3'-dimethyl-4, 4'diaminodicyclohexylmethane, 4-(aminomethyl)octane-1,8-diamine, ethylene diamine, ethylene triamine, propylene diamine, tetramethylene diamine, 1,6-hexamethylene diamine, bis(6-aminohexyl)ether, tricyclodecane diamine, N,N'-dimethyldiethyltriamine, cyclohexyl-1,2,4-triamine, cyclohexyl-1,2,4,5-tetraamine, 3,4,5-triaminopyran, 3,4-diaminofuran, cycloaliphatic diamines, such as 1,8-p-menthane diamine, triaminononane, polyether amine, and a polyaspartic ester based amine.

6. The method according to any one of claims 1 to 5, wherein the amine contains one or more primary amino groups, at least one of which is attached to a secondary C-atom or a tertiary C-atom, preferably to a secondary C-atom.

7. The method according to claim 6, wherein the amine comprises at least one of isophorone diamine, 4,4'-diaminodicyclohexylmethane, 3, 3'-dimethyl-4, 4'diaminodicyclohexylmethane, 1,8-p-menthane diamine, a polyether amine.

8. The method according to any one of claims 1 to 7, wherein the morpholinedione comprises a N-hydroxyethylmorphonline-2,3-dione.

9. The method according to any one of claims 1 to 8, wherein the isocyanate prepolymer is available from
i) a monomeric polyisocyanate with aliphatically, cycloaliphatically, araliphatically or aromatically bonded isocyanate groups or from any mixture of such monomeric polyisocyanates,
ii) a polyisocyanate with iminooxadiazinedione, isocyanurate, uretdione, urethane, allophanate, biuret, urea, oxadiazinetrione, oxazolidinone, acylurea and/or carbodiimide structures, based on monomeric polyisocyanates with aliphatically, cycloaliphatically, araliphatically or aromatically bonded isocyanate groups, or from mixtures of such monomeric polyisocyanates,
iii) a mixture of polyisocyanates of both groups i) and ii),
and wherein the isocyanate prepolymer preferably has a functionality of at least 2.

10. The method according to any one of claims 1 to 9, wherein the isocyanate prepolymer is available from
i) polyether polyols, which are available by the alkoxylation of starter molecules, which are selected from the group consisting of ethylene glycol, 1,3-propylene glycol and butane-1,4-diol, hexane-1,6-diol, neopentyl glycol, 2-ethylhexane-1,3-diol, glycerol, trimethylolpropane, pentaerythritol, and low-molecular-weight esters of such polyols with dicarboxylic acids, which esters exhibit hydroxyl groups, or low-molecular-weight ethoxylation or propoxylation products of such simple polyols, or any mixture of such polyhydroxy compounds, with ethylene oxide and/or propylene oxide as alkoxylation agent,
ii) polyester polyols, which are available from the reaction of polyhydric alcohols with polybasic carboxylic acids, corresponding carboxylic anhydrides, corresponding polycarboxylic esters of lower alcohols, or lactones,
iii) polyester carbonate polyols, which are available from the reaction of polyester polyols according to ii) with carbonic acid derivatives, such as diphenyl- or dimethyl carbonate or phosgene,
iv) a mixture of polyols of groups i), ii) and/or iii).

11. The method according to any one of claims 1 to 10, wherein the curable composition has a free hydroxyl group.

12. The method according to any one of claims 1 to 11, further comprising contacting the curable composition with a second isocyanate prepolymer and/or a isocyanate to form a secondary curable composition.

13. A curable composition, produced by the method according to any of claims 1, 2 or 4 to 11 or a secondary curable composition, produced by the method according to claim 12.

14. A curable composition or a secondary curable composition according to claim 13, wherein the curable composition or secondary curable composition is at least one component of at least one of a coating, an adhesive, a casting, a sealant, an elastomer, and a foam.

15. A product, produced by the method according to any of claims 3 to 8.
